# EUROPÄISCHE PATENTSCHRIFT

(11) **EP 1 094 959 B1**
(45) Veröffentlichungstag und Bekanntmachung des Hinweises auf die Patenterteilung: **28.04.2004**
(21) Anmeldenummer: 99919136.4
(22) Anmeldetag: 22.03.1999
(51) Int. Cl.: B60G 17/04

(54) **DRUCKSTEUERUNGSSYSTEM**
PRESSURE REGULATING SYSTEM
SYSTEME DE REGULATION DE PRESSION

(30) Priorität: 08.07.1998 DE 19830506
(43) Veröffentlichungstag der Anmeldung: 02.05.2001
(73) Patentinhaber: HYDAC Technology GmbH, D-66280 Sulzbach (DE)
(72) Erfinder: KÖHLER, Michael, D-66557 Illingen (DE); ZYRULL, Karsten, D-66589 Mersweiler (DE); ALME, Karl-Heinz, D-88097 Eriskirch (DE)
(74) Vertreter: Bartels, Martin Erich Arthur
(86) Internationale Anmeldenummer: PCT/EP1999/001916
(87) Internationale Veröffentlichungsnummer: WO 2000/002743

(56) Entgegenhaltungen:
- EP-A- 0 425 876
- US-A- 4 872 702
- US-A- 5 016 909
- PATENT ABSTRACTS OF JAPAN vol. 016, no. 321 (M-1279), 14. Juli 1992 (1992-07-14) & JP 04 090917 A (HINO MOTORS LTD), 24. März 1992 (1992-03-24)
- PATENT ABSTRACTS OF JAPAN vol. 009, no. 191 (M-402), 7. August 1985 (1985-08-07) & JP 60 056617 A (KAYABA KOGYO KK), 2. April 1985 (1985-04-02)
- PATENT ABSTRACTS OF JAPAN vol. 010, no. 055 (M-458), 5. März 1986 (1986-03-05) & JP 60 203515 A (MAZDA KK), 15. Oktober 1985 (1985-10-15)
- PATENT ABSTRACTS OF JAPAN vol. 016, no. 111 (M-1223), 18. März 1992 (1992-03-18) & JP 03 281417 A (AISIN SEIKI CO LTD), 12. Dezember 1991 (1991-12-12)

## Beschreibung

Die Erfindung betrifft ein Drucksteuerungssystem für die Anpassung eines hydraulischen Antriebes an sich ändemde Lastsituationen gemäß den Merkmalen des Oberbegriffes des Patentanspruches 1.

Ein System dieser Art, das für eine hydropneumatisch abgestützte Radaufhängung eines Fahrzeuges vorgesehen ist, ist aus dem Dokument JP-A-04 090917 bekannt. Bei diesem Steuerungssystem sind der erste und der zweite Hydrospeicher jeweils als Kolbenspeicher ausgebildet. Der dein Ölraum des zu steuernden hydraulischen Antriebes, in diesem Falle also dem die Radaufhängung abstützenden hydropneumatischen Arbeitszylinder, unmittelbar nachgeschaltete erste Kolbenspeicher ist mit einem Hubwegsensor versehen, um aufgrund der Kolbenstellung des ersten Kolbenspeichers den Istwert des Vorspanndruckes zu ermitteln und ein Steuersignal für die Steuerungsvorrichtung der Versorgungseinrichtung zu erzeugen. Durch die dahingehende Anordnung ist die Genauigkeit des bekannten Drucksteuerungssystems für die Anpassung des hydraulischen Antriebes an sich ändernde Lastsituationen reduziert, insbesondere bei dynamisch auftretenden Änderungen.

Ausgehend von diesem Stand der Technik in Form des vorbeschriebenen Drucksteuerungssystems liegt der Erfindung die Aufgabe zugrunde, ein hinsichtlich des Betriebsverhaltens verbessertes und kostengünstig herstellbares Drucksteuerungssystem zu schaffen. Diese Aufgabe löst erfindungsgemäß ein Drucksteuerungssystem mit den Merkmalen des Patentanspruches 1 in seiner Gesamtheit.

Dadurch, daß gemäß dem kennzeichnenden Teil des Patentanspruches 1 der erste Hydrospeicher als Membranspeicher ausgebildet ist und daß die Kolbenweg-Erfassungseinrichtung am zweiten Hydrospeicher angeordnet ist, der sich zwischen Druckversorgungseinrichtung und erstem Hydrospeicher befindet, ergibt sich nicht nur eine kostengünstigere und raumsparendere Lösung, sondern es ergeben sich darüber hinaus die Vorteile der Gewichtsverringerung und des verbesserten Ansprechverhaltens, weil das den Istwert des Vorspanndruckes darstellende Steuersignal nicht an dem dem Arbeitszylinder unmittelbar zugeschalteten Hydrospeicher gewonnen wird, wie dies bei dem bekannten System aufgrund der Kolbenstellung des Kolbenspeichers mittels des Hubwegsensors geschieht, sondern erst in einem dem nachgeschalteten Hydrospeicher (Membranspeicher) weiteren zweiten Hydrospeicher (Kolbenspeicher). Hierdurch wird auch eine genauere Steuerung ermöglicht und die Möglichkeit eröffnet, eine dynamisch fortlaufende Anpassung des Vorspanndruckes zu erreichen.

Die Verwendung von Hydrospeichem in Form von Membranspeichem ist bei einem hydraulischen Stoßdämpfersystem für Fahrzeuge bereits aus dem Dokument JP-A-60 056617 an sich bekannt. Bei diesem System sind zwei einander nachgeschaltete Membranspeicher jedoch lediglich als Puffersystem vorgesehen, durch das das den Stoßdämpfern zugeführte Arbeitsfluid von dem Arbeitsfluid der tankseitigen Druckversorgungseinrichtung getrennt wird, was dem Zweck dient, die Schmierungseigenschaften zu verbessern und den Leitungswiderstand auf der Stoßdämpferseite zu verringern. Sofern eine dynamisch fortlaufende Anpassung des Vorspanndruckes gewünscht ist, besteht mit der erfindungsgemäßen Lösung die Möglichkeit, einen den Istwert des Vorspanndruckes ermittelnden Drirckaufnehmer an eine Rechnereinheit (Mikroprozessor) anzuschließen, die die Druckwerte auswertet, die jeweiligen Sollwerte des Vorspanndruckes ermittelt und die Steuerungsvorrichtung für die dynamischen Anpassungsprozesse fortlaufend entsprechend ansteuert.

Vorzugsweise besteht der hydraulische Antrieb bei dem erfindungsgemäßen System aus einem Linearantrieb, insbesondere in Form eines hydraulischen Arbeitszylinders; es kann aber auch ein Hydromotor als hydraulischer Antrieb angesteuert werden. Die dahingehenden Antriebe können nicht nur als Federdämpfungssysteme für Fahrzeugachsen eingesetzt werden; sondern vielmehr auch auf anderen Gebieten, wie bei Fahrstühlen und Hebebühnen, aber auch als hydraulische Antriebe bei Arbeits- und Werkzeugmaschinen.

Weitere vorteilhafte Ausführungsformen sind Gegenstand der Unteranprüche.

Nachstehend ist die Erfindung anhand eines in der Zeichnung dargestellten Ausführungsbeispiels näher erläutert.

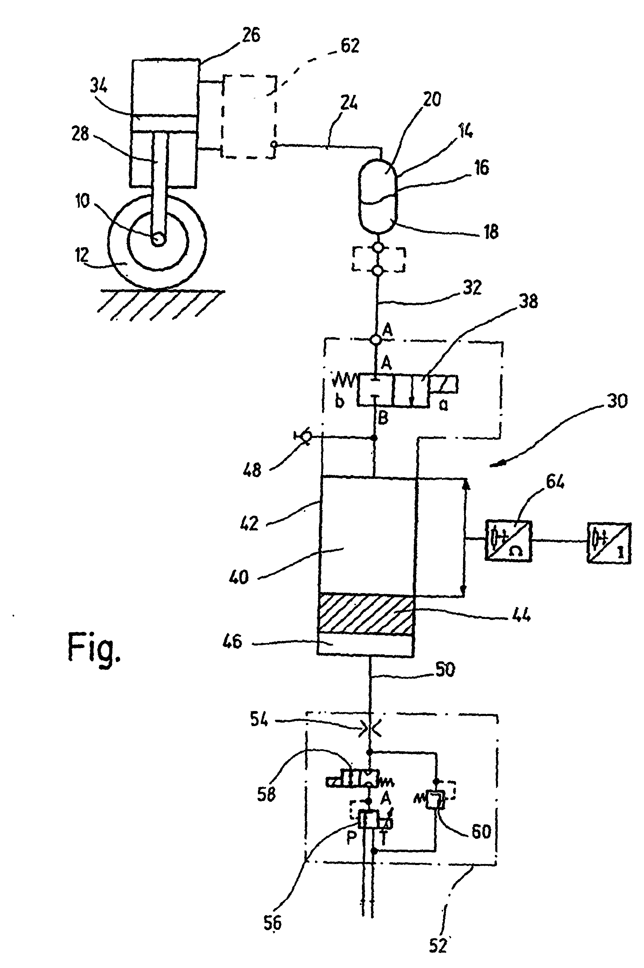

Es zeigt die
- Fig.1: eine prinzipielle Schaltdarstellung eines Ausführungsbeispiels in Anwendung als Federungssystem.

Das angesprochene Federungssystem dient der Anpassung an sich ändernde Lasten für Fahrzeugachsen, wobei in der Figur lediglich eine einzelne Fahrzeugachse 10 prinzipiell dargestellt ist. Um diese Achse 10 drehbar ist ein Fahrzeugreifen 12 angeordnet, der als feststehender Radkranz alternativ auch dem Antrieb eines Kettentriebes (nicht dargestellt) dienen kann. Der Einsatz des hier beschriebenen Federungssystems ist insbesondere lohnend im Mobilfahrzeugbau, also für Schwerlast-Nutzfahrzeuge, Mobilkrane, Traktoren, Muldenkipper und dergleichen, d.h. insbesondere für Einsatzfälle, wo hohe veränderliche Achslasten auftreten können.

Das Federungssystem weist einen Hydrospeicher 14 auf, der als Federungsspeicher dient und der in üblicher Bauweise ausgeführt ist, beispielsweise als Membranspeicher. Symbolisch ist in dem Hydrospeicher 14 daher eine gummielastische Trennmembran 16 dargestellt, die eine Gas-Vorratskammer 18 gasdicht von einer Fluid-Vorratskammer 20, die vorzugsweise mit Hydrauliköl befüllt ist, trennt. Diese die Fluidseite des Hydrospeichers 14 bildende Kammer 20 ist über eine Verbindungsleitung 24 an einen hydraulischen Arbeitszylinder 26 als Linearantrieb kolbenseitig angeschlossen.

Der Arbeitszylinder 26 dient als Federungszylinder für die Fahrzeugachse 10, wobei die Kolbenstange 28 des hydraulischen Kolbens 34 unmittelbar auf die Fahrzeugsachse 10 einwirkt. Die Federkennlinie des Arbeitszylinders 26 ist über das Ansteuern des Gasvorspanndruckes des Hydrospeichers 14 über eine Steuerungsvorrichtung automatisch einstellbar, die eine als Ganzes mit 30 bezeichnete Versorgungseinrichtung aufweist, mittels deren, wie noch näher erläutert wird, nach Maßgabe der Steuerungsvorrichtung der Druck eines gasförmigen Arbeitsmediums einstellbar ist, das den Gas-Vorspanndruck im Hydrospeicher 14 erzeugt.

Diese Versorgungseinrichtung 30 ist über eine Verbindungsleitung 32 mit der die Gasseite des Hydrospeichers 14 bildenden Kammer 18 verbunden. Über ein Schaltventil 38, das von der Steuerungsvorrichtung ansteuerbar ist, ist die Verbindungsleitung 32 am Gasraum 40 eines weiteren Hydrospeichers angeschlossen, der als Kolbenspeicher 42 ausgebildet ist und einen frei beweglichen Trennkolben 44 enthält, der den Gasraum 40 vom Ölraum 46 trennt. Ein mit dem Gasraum verbundenes Gasventil 48 dient als Füllventil für das Arbeitsmedium, bevorzugt in Form von Stickstoffgas.

Der Ölraum 46 des Kolbenspeichers 42 ist über eine Leitung 50 mit einer steuerbaren Druckversorgungseinrichtung 52, die Teil der Steuerungsvorrichtung ist, verbunden. Die Druckversorgungseinrichtung 52 ermöglicht über eine Drossel 54 die gesteuerte Zufuhr und Abfuhr eines fluiden Steuermediums zum Ölraum 46 des Kolbenspeichers 42. Die Druckversorgungseinrichtung 52 weist ein Druckregelventil 56 auf, dessen mit P bezeichneter Anschluß mit einer Druckquelle für das Steuermedium und dessen mit T bezeichneter Anschluß mit dem Fluidtank verbunden ist. Mit seinem mit A bezeichneten Anschluß ist das Druckregelventil 56 über ein Schaltventil 58 mit der Drossel 54 und über diese demgemäß mit der zum Ölraum 46 führenden Leitung 50 verbunden. Als Sicherheitseinrichtung sind das Schaltventil 58 und das Druckregelventil 56 durch ein Druckbegrenzungsventil 60 überbrückt.

Im Betrieb erfolgt mittels der Druckversorgungseinrichtung 52 eine Versorgung des Ölraumes 46 des Kolbenspeichers 42 mit Steuermedium, um den Trennkolben 44 in eine einem gewünschten Vorspanndruck des Arbeitsmediums im Gasraum 40 entsprechende Stellung zu bewegen und einen vom Druckaufnehmer 36 ermittelten Istwert zu erreichen, der einem von der Steuerungsvorrichtung für eine gegebene Lastsituation vorgegebenen Sollwert entspricht. Im Falle, daß der Istwert höher ist als der vorgegebene Sollwert, erfolgt eine entsprechende Drucksteuerung durch Entspannen, d.h. Abfuhr von Steuermedium über die Leitung 50 und das Druckregelventil 56, bis der gewünschte Vorspanndruck im Kolbenspeicher 42 und im als Federungsspeicher dienenden Hydrospeicher 14 erreicht ist.

Bei der Veränderung der Druckkennlinie durch Verdichten und Entspannen des Gases des Arbeitsmediums kommt es aufgrund der polytrop erfolgenden Zustandsänderung zu einem überproportionalen Anstieg bzw. Abfall des Druckes. Ein rein druckgesteuertes Abschalten der durch die Druckversorgungseinrichtung 52 bewirkten Bewegung des Kolbens 44 des Kolbenspeichers 42 würde somit beim Verdichten zu einem zu niedrigen Druckwert und beim Entspannen zu einem zu hohen Druckwert nach erfolgtem Temperaturausgleich führen. Daher ist die Steuerungsvorrichtung so programmiert, daß das Druckregelventil 56 während der Phasen des Temperaturausgleichs durch Zu- bzw. Abführen von Steuermedium den Kolben 44 nachführt und somit den Druck auf dem vorgegebenen Sollwert konstant hält. Für die Automatisierung durch Aufbau eines Druckregelkreises ist vorzugsweise ein proportional verstellbares Druckregelventil 56 vorgesehen.

Die Verbindungsleitung 24 zwischen dem als Federungsspeicher dienenden Hydrospeicher 14 und dem Arbeitszylinder 26 ist über eine mit der nicht gezeigten Steuervorrichtung zusammenwirkende, zusätzliche Ventilsteuerung 62 verbunden. Für die Ermittlung des Istwertes des Vorspanndruckes, d.h. des Druckes des Arbeitsmediums, ist kein Druckaufnehmer vorgesehen; vielmehr ist eine Einrichtung zur Erfassung des Kolbenweges des Trennkolbens 44 im Kolbenspeicher 42 vorgesehen. Diese mit 64 bezeichnete Kolbenweg-Erfassunsgeinrichtung erzeugt ein die Stellung des Trennkolbens 44 innerhalb des Kolbenspeichers 42 darstellendes Steuersignal zur Abgabe an die Steuerungsvorrichtung. Bei bekannten Geometrien und Randbedingungen läßt sich jeder Kolbenstellung ein bestimmter Istwert des Gasdruckes zuordnen. Je nach gewünschtem Gasdruck, d.h. Vorspanndruck des Hydrospeichers 14, wird eine bestimmte Kolbenstellung angefahren. Dies wird über die Leitung 50 in entsprechender Weise wie bei dem erstbeschriebenen Ausführungsbeispiel mittels der Druckversorgungseinrichtung 52 bewirkt, die das Steuermedium entsprechend zu dem Ölraum 46 des Kolbenspeichers 42 zuführt oder von diesem abführt.

## Patentansprüche

1. Drucksteuerungssystem für die Anpassung eines hydraulischen Antriebes (26) an sich ändernde Lastsituationen, mit einem mit dem hydraulischen Antrieb (26) verbundenen ersten Hydrospeicher (14), einer Versorgungseinrichtung (30) für ein den Vorspanndruck des ersten Hydrospeichers (14) erzeugendes Arbeitsmedium, mit einer Steuerungsvorrichtung, über die die Versorgungseinrichtung (30) steuerbar ist, um durch Ansteuern des Vorspanndruckes des ersten Hydrospeichers (14) die Druckkennlinie des hydraulischen Antriebes (26) einzustellen, und mit einem zweiten als Kolbenspeicher ausgebildeten Hydrospeicher (42), der einerseits das Arbeitsmedium der Versorgungseinrichtung (30) und andererseits ein Steuermedium enthält, dessen Druck mittels einer steuerbaren Druckversorgungseinrichtung (52) der Steuerungsvorrichtung einstellbar ist, wobei die Steuerungsvorrichtung für die Ermittlung des Istwertes des Vorspanndruckes des Arbeitsmediums eine Kolbenweg-Erfassungseinrichtung (64) enthält, die aufgrund der Stellung des Kolbens (44) im Kolbenspeicher (42) ein den Istwert des Vorspanndruckes des Arbeitsmediums darstellendes Steuersignal erzeugt, **dadurch gekennzeichnet, daß** der erste Hydrospeicher (14) als Membranspeicher ausgebildet ist und daß die Kolbenweg-Erfassungseinrichtung (64) am zweiten Hydrospeicher (42) angeordnet ist, der sich zwischen Druckversorgungseinrichtung (52) und erstem Hydrospeicher (14) befindet.

2. Drucksteuerungssystem nach Anspruch 1, **dadurch gekennzeichnet, daß** der hydraulische Antrieb ein Linearantrieb, insbesondere ein hydraulischer Arbeitszylinder (26) oder ein Hydromotor ist.

3. Drucksteuerungssystem nach Anspruch 2, **dadurch gekennzeichnet, daß** als hydraulischer Antrieb mindestens ein Arbeitszylinder (26) vorhanden ist, der als an sich ändernde Lasten anpaßbarer Federungszylinder mit einer Fahrzeugachse (10) zusammenwirkt, und daß der Membranspeicher (14) ein mit unterschiedlichem Vorspanndruck vorspannbarer Federungsspeicher ist.

4. Drucksteuerungssystem nach einem der Ansprüche 1 bis 3, **dadurch gekennzeichnet, daß** die steuerbare Druckversorgungseinrichtung (52) für das Steuermedium des Kolbenspeichers (42) für die Einstellung eines ausgewählten Istwertes des Vorspanndruckes ansteuerbar ist.

5. Drucksteuerungssystem nach einem der Ansprüche 1 bis 4, **dadurch gekennzeichnet, daß** die steuerbare Druckversorgungseinrichtung (52) ein Druckregelventil (56) zum Konstanthalten des Druckes des Steuermediums über vorbestimmte Zeiträume hinweg aufweist.

6. Drucksteuerungssystem nach Anspruch 5, **dadurch gekennzeichnet, daß** als Arbeitsmedium ein gasförmiger Stoff, vorzugsweise Stickstoffgas, vorgesehen ist und daß Druckflüssigkeit als Steuermedium des Kolbenspeichers (42) zu- oder von diesem abführbar ist.

## Claims

1. Pressure control system for adapting a hydraulic actuator (26) to fluctuating load situations, with a first hydraulic accumulator (14) linked to the hydraulic actuator (26), a hydraulic power unit (30) for a working medium generating the priming pressure of the first hydraulic accumulator (14), with a control device by which the hydraulic power unit (30) can be controlled, in order, by controlling the priming pressure of the first hydraulic accumulator (14), to adjust the pressure performance curve of the hydraulic actuator (26), and with a second hydraulic accumulator (42) in the form of a piston accumulator, which contains firstly the working medium for the hydraulic power unit (30) and secondly a control medium, the pressure of which can be adjusted by means of a controllable pressure supply device (52) of the control device, while the control device contains a piston stroke recording device (64) for determining the actual value of the priming pressure of the working medium, which, on the basis of the position of the piston (44) in the piston accumulator (42), generates a control signal representing the actual value of the priming pressure of the working medium, **characterised in that** the first hydraulic accumulator (14) is in the form of a diaphragm accumulator and that the piston stroke recording device (64) is arranged on the second hydraulic accumulator (42), which is located between the pressure supply device (52) and first hydraulic accumulator (14).

2. Pressure control system according to claim 1, **characterised in that** the hydraulic actuator is a linear actuator, in particular a hydraulic working cylinder (26) or a hydromotor.

3. Pressure control system according to claim 2, **characterised in that** as hydraulic actuator, there is at least one hydraulic working cylinder (26), which co-operates as a spring cylinder which is adjustable to fluctuating loads with a vehicle axle (10), and that the diaphragm accumulator (14) is a primable spring accumulator with different priming pressure

4. Pressure control system according to one of claims 1 to 3, **characterised in that** the controllable pressure supply device (52) for the control medium of the piston accumulator (42) can be controlled to set a selected actual value of the priming pressure.

5. Pressure control system according to one of claims 1 to 4, **characterised in that** the controllable pressure supply device (52) displays a pressure control valve (56) to maintain the pressure of the control medium constant over predefined periods.

6. Pressure control system according to claim 5, **characterised in that** a gaseous substance, advantageously nitrogen gas, is provided as working medium, and that hydraulic fluid as control medium of the piston accumulator (42) can be conveyed to or from this.

## Revendications

1. Système de commande à poussoir pour l'adaptation d'un entraînement hydraulique (26) aux situations de charge changeantes, avec un premier accumulateur hydraulique (14) relié à l'entraînement hydraulique (26), un dispositif d'alimentation (30) pour un fluide de travail générant la pression initiale du premier accumulateur hydraulique (14), avec un appareil de régulation, au moyen duquel le dispositif d'alimentation (30) peut être régulé, pour ajuster par génération de la pression initiale du premier accumulateur hydraulique (14) la caractéristique de pression de l'entraînement hydraulique (26), et avec un second accumulateur hydraulique (42) constitué comme un accumulateur à piston, qui contient d'une part le fluide de travail du dispositif d'alimentation (30) et d'autre part un fluide de commande, dont la pression est ajustable au moyen d'un dispositif d'alimentation sous pression (52) réglable de l'appareil de régulation, sachant que l'appareil de régulation pour la mesure de la valeur réelle de la pression initiale du fluide de travail contient un équipement d'acquisition de la course du piston (64), qui en raison de la position du piston (44) dans l'accumulateur à piston (42) produit un signal de régulation représentant la valeur réelle de la pression initiale du fluide de travail, **caractérisé en ce que** le premier accumulateur hydraulique (14) est constitué comme un accumulateur à membrane et **en ce que** l'équipement d'acquisition de la course du piston (64) est installé sur le second accumulateur hydraulique (42), qui se trouve entre le dispositif d'alimentation sous pression (52) et le premier accumulateur hydraulique (14).

2. Système de commande à poussoir selon la revendication 1, **caractérisé en ce que** l'entraînement hydraulique est un entraînement linéaire, en particulier un cylindre de travail hydraulique (26) ou un moteur hydraulique.

3. Système de commande à poussoir selon la revendication 2, **caractérisé en ce que** comme entraînement hydraulique au moins un cylindre de travail (26) est présent, lequel cylindre agit en concomitance en tant que cylindre à ressort adaptable à des charges changeantes avec l'essieu d'un véhicule (10), et **en ce que** l'accumulateur à membrane (14) est un accumulateur à ressort préchargeable à une pression initiale différente.

4. Système de commande à poussoir selon l'une quelconque des revendications 1 à 3, **caractérisé en ce que** le dispositif d'alimentation sous pression réglable (52) pour le fluide de commande de l'accumulateur à piston (42) peut être commandé pour le réglage d'une valeur réelle déterminée de la pression initiale.

5. Système de commande à poussoir selon l'une quelconque des revendications 1 à 4, **caractérisé en ce que** le dispositif d'alimentation sous pression réglable (52) présente sur son trajet un détendeur (56) pour maintenir constante la pression du fluide de commande sur une période prédéfinie.

6. Système de commande à poussoir selon la revendication 5, **caractérisé en ce que**, comme fluide de travail, une substance gazeuse est prévue, par exemple de l'azote, et **en ce que** le fluide hydraulique tel que le fluide de commande de l'accumulateur à piston (42) peut s'y déverser ou en provenir.
